# EUROPEAN PATENT APPLICATION

(11) **EP 1 326 029 A1**
(43) Date of publication of application: **09.07.2003**
(21) Application number: 02027314.0
(22) Date of filing: 06.12.2002
(51) Int. Cl.: F16D 66/02

(54) **Method of determining brake wear**

(30) Priority: 02.01.2002 GB 0200044
(71) Applicant: JCB Transmissions, Wrexham, Clwyd LL13 9UF (GB)
(72) Inventor: Miller, Michael Harold, Wrexham, Clwyd LL11 2PT (GB)
(74) Representative: Lucking, David John

(57) **Abstract**

A method of determining whether brake (10) wear has exceeded a predetermined maximum in a brake (10) of the kind including at least one first brake part (15a, 15b, 15c, 15d) which is moveable into engagement with at least one second brake part (18a, 18b, 18c, 18d, 18e) which is rotatable with a member (12) to be braked, and an actuator (20) to move the first brake part (15a etc.) into engagement with the second brake part (18a etc.), an indicator element (25) being movable with the actuator (20), and the first and second brake parts (15a, 18a etc.), the actuator (20) and indicator element (25) being housed in a housing (14) which includes a guide (30) adapted to receive an indicator probe (31), the guide (30) being positioned to correspond to a position beyond which the indicator element (25) will move when brake wear has exceeded a predetermined maximum, the method including moving the indicator probe (31) in the guide means (30) towards the indicator element (25) and determining whether the indicator probe (31) engages the indicator element (25).

## Description

### Description of Invention

This invention relates to a method of determining brake wear and more particularly of determining whether brake wear has exceeded a predetermined maximum in a brake of the kind including at least one first brake part which is moveable into engagement with at least one second brake part which is rotatable with a member to be braked, and an actuator to move the first brake part into engagement with the second brake part.

In such brakes, a plurality of first and second brake parts may be provided which are interleaved. The brake parts may be plates which may be immersed in an oil. Such brakes typically are provided for braking an axle shaft within an axle housing.

Conventionally in order to determine the extent of brake wear, it is necessary to remove the axle from the vehicle or other machine on which the axle is provided, drain the oil and dismantle the axle, to render the brake parts visible. This is obviously a major servicing operation which it is desired to avoid, particularly where brake wear has not exceeded a predetermined maximum.

According to a first aspect of the invention we provide a method of determining whether brake wear has exceeded a predetermined maximum in a brake of the kind including at least one first brake part which is moveable into engagement with at least one second brake part which is rotatable with a member to be braked, and an actuator to move the first brake part into engagement with the second brake part, an indicator element being movable with the actuator, and the first and second brake parts, the actuator and indicator element being housed in a housing which includes a guide adapted to receive an indicator probe, the guide being positioned to correspond to a position beyond which the indicator element will move when brake wear has exceeded a predetermined maximum, the method including moving the indicator probe in the guide means towards the indicator element and determining whether the indicator probe engages the indicator element.

The method of the invention may be performed without having to dismantle the brake, and where the brake is provided in an axle housing of an axle of a vehicle or machine, without having to remove the axle from the vehicle/machine.

Accordingly the invention provides substantially economic advantage over known brake wear determination methods.

In one embodiment, the indicator element includes a surface with which the indicator probe engages when brake wear has not exceeded a predetermined maximum. Thus by determining that the probe does not engage the indicator element surface when moved in the guide e.g. by moving in the guide beyond a position the probe would move to if the probe had engaged with the indicator element, it can be determined that the amount of brake wear is beyond the predetermined maximum.

In another embodiment, the indicator element includes a recess in which the indicator probe engages when brake wear has not exceeded a predetermined maximum. In this event, permitted movement of the probe in the guide less than that permitted if the probe engages in the indicator recess would indicate that the amount of brake wear is beyond the predetermined maximum.

In one example, the method may include moving the indicator probe in the guide means towards the indicator element and determining whether the indicator probe engages the indicator element prior to application of the brake. In this case it will be essential for the position of the actuator and hence of the indicator element to be dependent upon the amount of brake wear. Preferably therefore the method includes moving the indicator probe in the guide means towards the indicator element and determining whether the indicator probe engages the indicator element whilst the brake is being applied, as in this position, the actuator and hence the indicator element will necessarily be at a position indicative of the amount of brake wear.

Although the housing may be part of an axle housing, the invention may be applied to other brake configurations where a determination of brake wear beyond a predetermined maximum is desired e.g. without having to dismantle the brake.

According to a second aspect of the invention we provide a brake including at least one first brake part which is moveable into engagement with at least one second brake part which is rotatable with a rotatable member to be braked, an actuator to apply the brake and an indicator element movable with the actuator, a housing for housing the first and second brake parts, the actuator and indicator element, the housing including a guide adapted to receive an indicator probe, the guide being positioned to correspond to a position beyond which the indicator element will move when brake wear has exceeded a predetermined maximum.

The invention is particularly but not exclusively applicable where access to the first and second brake parts visually to examine the extent of brake wear is obscured by the housing.

The guide may be a simple opening in the housing through which the indicator probe is insertable.

The invention has been particularly developed where the brake has a plurality of first brake parts which are generally parallel and affixed relative to the housing, and wherein the rotatable member to be braked is a shaft which carries a plurality of second brake parts, there being a second brake part interposed between each adjacent pair of first brake parts, and in which the first and second brake parts may be immersed in use, in oil.

To avoid having to drain oil from the housing before inserting the probe in the opening or other guide, preferably the guide is provided so as to extend downwardly through the housing towards the indicator element. Preferably a sealing means is provided to close the guide when the indicator probe is removed.

The brake may be of the kind in which the actuator is movable to apply the brake by hydraulic fluid. If desired subsequent to brake application, a residual pressure is applied to maintain the actuator in a position adjacent to the first and second brake parts whilst not applying braking pressure in which case a determination of brake wear may be performed whilst the brake is released, although the determination preferably is made whilst the brake is applied.

In one embodiment the indicator element includes a surface with which the indicator probe engages when brake wear has not exceeded a predetermined maximum, the indicator probe including a shank which is inserted into and moved within the guide to bring an end of the probe into engagement with the indicator element when brake wear is less than the predetermined maximum, the shank being dimensioned such that a first shank length extends outwardly of the guide when the end of the shank is in engagement with the indicator element, and a second shank length extends outwardly of the guide when the indicator has moved beyond the guide so that the end of the shank does not engage with the indicator element.

The invention will now be described with reference to the accompanying drawings in which:-
FIGURE 1 is an illustrative side cross sectional view through part of an axle to which the invention is applied, when the brake has not exceeded a predetermined amount;
FIGURE 2 is a view similar to figure 1 but in which the brake wear has exceeded a predetermined amount.

Referring to the drawings, a brake 10 is provided for braking a rotatable member which in the present case is an axle shaft 12 which extends through an axle housing 14. The shaft 12 carries a plurality i.e. four brake parts 15a, 15b, 15c, 15d which are generally parallel annular plates, the plates 15a etc. being keyed to the shaft 12 via a collar 16. The brake 10 further includes a plurality, i.e. five second brake parts 18a, 18b, 18c, 18d, 18e which are fixed relative to the axle housing 14 via a collet 19, and are also in the form of plates. The plates 15a etc. which are rotatable with the shaft 12 are interposed between the plates 18a etc. which are affixed relative to the housing 14, one of the rotatable plates 15a etc. being interleaved between a pair of the housing-affixed plates 18a etc.

As the shaft 12 rotates, when the brake is not applied, the rotatable plates 15a etc. may rotate relative to the fixed plates 18a etc.

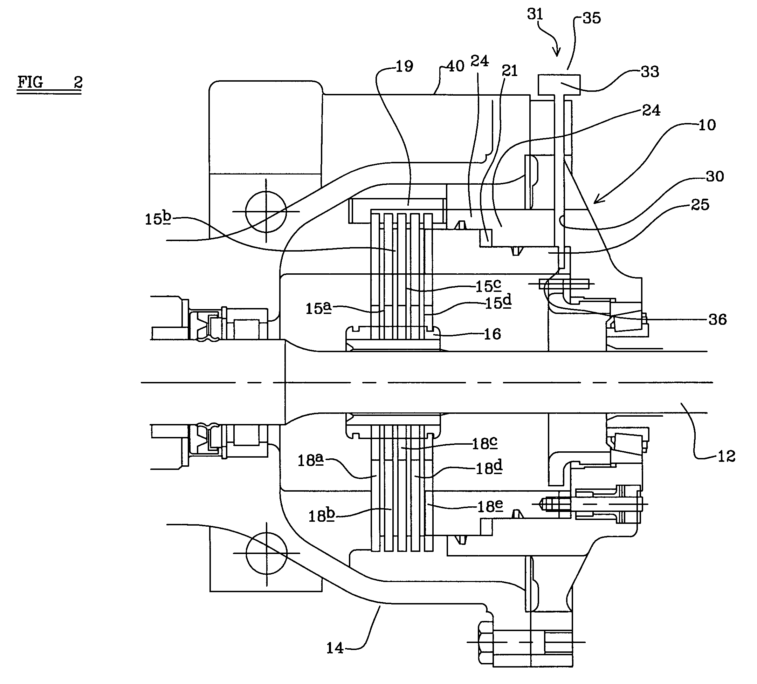

The brake 10 further includes an actuator 20 which is an annular piston which is moveable by hydraulic fluid in an annular chamber 21 which can only be seen in figure 2, as the hydraulic fluid is introduced into the chamber 21 under pressure. The chamber 21 is formed between the piston 20 and a cylinder part 24 in which the piston 20 slides as it moves.

When pressure is applied, the piston 20 will move in the direction indicated by arrow A to force the plates 15 etc. which are fixed relative to the shaft 12 and the plates 18a etc. which are fixed relative to the housing 14, together, to cause braking of the shaft 12.

In another embodiment, the piston 20 may be actuatable by other fluid means such as pneumatic fluid, or even mechanically. In each case, the piston 20 carries with it an indicator element 25 which in this example is an integral part of the piston 20, but in another arrangement may be an element secured to the actuator 20 by any suitable means.

According to the present invention, the brake 10 includes a guide 30 which in this example is a simple opening in the housing 14. The opening 30 is carefully positioned as described below, so that using an indicator probe as shown at 31, it can be determined whether the brake 10, i.e. the plates 15a etc. and 18a etc. have worn beyond a predetermined and acceptable extent.

The indicator probe 31 includes an elongate shank 33 and in this example, has a head 35. The shank 33 is slightly thinner than the guide opening 30 and its length is carefully selected for operational purposes as will appreciated from the following description of use of the indicator probe 31.

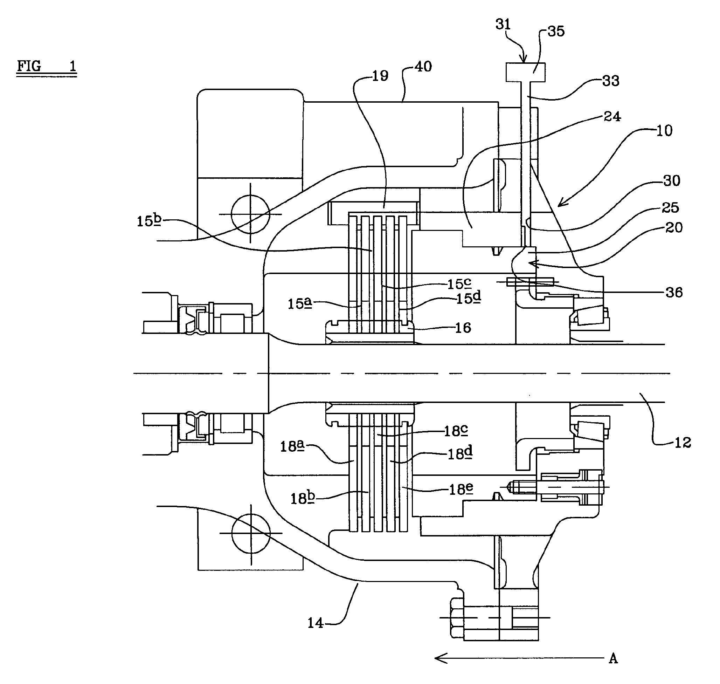

In figure 1 the brake 10 is shown in a condition which it will adopt when the brake is applied, but the plates 15a etc. and 18a. have not worn beyond the predetermined extent. When the shank 33 of the indicator probe 31 is inserted into the guide opening 33, the probe 31 may be moved in the guide until a nose end 36 of the indicator probe 31 engages with the indicator element 25. The shank 33 of the indicator probe 31 is selected to be of such length that a first length of the probe 31 will extend from the housing 14, i.e. in this example, the head 35 will be proud of the housing 14, to indicate that brake wear has not exceeded a predetermined amount.

It will be appreciated that as the plates 15a, 18a etc. wear, as indicated in figure 2, the piston 20 will need to move further in the direction of arrow A in order to apply the brake. Thus in figure 2, where the plates 15a, 18a etc. have worn beyond a predetermined amount, the piston 20 will, when the brake 10 is applied, adopt a position further in the direction of arrow A, and in this position, the indicator element 25 will have moved beyond the guide opening 30.

Thus if the probe 31 is inserted into the guide opening 30 and moved in the opening 30, the probe end 36 will fail to engage the indicator element 25 and accordingly the probe 31 can be moved to the position indicated in figure 2, behind the indicator element 25 and piston 20.

Thus a second length of the shank 33 of the probe 31 will project from the opening 30, which in the present case, is a very small length indeed, such that the head 35 of the probe 31 can engage or at least lie very close to the housing 14.

Usually the plates 15a, 18a etc. will be immersed in an oil contained within the axle housing 14 to lubricate the brake 10. Thus preferably the opening 30 is made through the housing from a top 40 of the housing 14 so that oil does not escape from the housing 14 when the opening 30 either is occupied by a probe element 31, or not. Preferably a sealing means such as a plug (not shown) is provided in the opening 30 when not in use by the probe 31.

Of course where the brake 10 is not of the oil immersed type, the opening 30 or other guide may be provided at alternative positions.

In each case the method may include determining the position for the guide means by measuring from a datum position of the housing 14, such as for example where the housing 14 is part of an axle housing, an axle centre, or any other datum position which readily can be identified and from which a measurement can be taken.

Thus the guide opening 30 can be provided at a position corresponding to the position of the indicter element 25 when brake wear has just exceeded an acceptable predetermined amount.

Various modifications may be made without departing from the scope of the invention.

For example, the indicator element 25 need not be a surface as indicated in the example described, but may be for example, a recess in the piston 20, or another part 25 which moves with the piston 20 or other actuator. In that case, when brake wear is less than a predetermined maximum extent, the end 36 of the indicator probe 31 may be received in the recess such that only a short first length of shank 33 extends from the guide 20, and when brake wear is beyond the predetermined maximum extent, the end 36 of the indicator probe 31 may engage with a surface of the piston 20 or other part which moves with the piston 20.

If desired, the indicator probe 31 may permanently be received in the guide opening 30. Means such as a spring could be provided to urge the probe 31 towards the indicator element 25, at least where the element 25 is a surface, and to urge the end 36 of the indicator probe 31 past the indicator element 25 in the event of excess brake wear. However the probe 31 would then prevent brake back-off which may be undesirable for the kind of brake described.

Where the indicator probe 31 is permanently received in the guide opening 30, if desired, the probe 31 and/or guide opening 30 may include a sensor means to activate a warning light or buzzer in the event that brake wear exceeds a predetermined minimum.

The invention may be applied to alternative types of brake to that described above. For example, although in the example described a plurality of first brake parts 15a etc. and second brake parts 18a etc. are provided, the invention is applicable where only single first and second brake parts are provided. Although in the example described with reference to the drawings, the brake parts 15a, 18a etc. are usually metal and braking is effected by metal-to-metal contact, and the metal wears away with brake use, in another example, one or both of the brake parts may carry friction material which wears with brake use and the invention may thus be used to determine when friction material wear is beyond a predetermined maximum.

Although the invention has been developed particularly for use with an axle brake in which the brake 10 is provided within an axle housing 14, the invention has other brake applications, particularly where visual access to the brake parts to determine the extent of brake wear is impaired.

Whereas the invention has been described with reference to determining brake wear when the brake is applied, the determination may be made with the brake not applied, but in that event, either a residual fluid pressure or mechanical spring means or the like would need to be used to ensure that the actuator 20 and hence indicator element 25 is moved towards the brake parts 15a, 18a etc. an amount dependant upon brake wear.

Other variations and modifications may be made as will be apparent to those skilled in the art.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of determining whether brake wear has exceeded a predetermined maximum in a brake (10) of the kind including at least one first brake part (18a,18b,18c,18d) which is moveable into engagement with at least one second brake part (15a,15b,15c,15d) which is rotatable with a member (12) to be braked, and an actuator (20) to move the first brake (18a,18b,18c,18d) part into engagement with the second brake part (15a,15b,15c,15d), an indicator element (25) movable with the actuator (20), the first (18a,18b,18c,18d) and second (15a,15b,15c,15d) brake parts, the actuator (20) and indicator element (25) being housed in a housing (14) which includes a guide (30) adapted to receive an indicator probe (31), the guide (30) being positioned to correspond to a position beyond which the indicator element (25) will move when brake wear has exceeded a predetermined maximum, the method including moving the indicator probe (31) in the guide (30) towards the indicator element (25) and determining whether the indicator probe (31) engages the indicator element (25).

2. A method according to claim 1 wherein the indicator element (25) includes a surface with which the indicator probe (31) engages when brake wear has not exceeded a predetermined maximum.

3. A method according to claim 1 wherein the indicator element (25) includes a recess in which the indicator probe (31) engages when brake wear has not exceeded a predetermined maximum.

4. A method according to any one of the preceding claims wherein the method includes determining the position for the guide (30) by measuring from a datum position of the housing (14).

5. A method according to any one of the preceding claims which includes moving the indicator probe (31) in the guide (30) towards the indicator element (25) and determining whether the indicator probe (31) engages the indicator element (25) prior to application of the brake (10).

6. A method according to any one of claims 1 to 4 which includes moving the indicator probe (31) in the guide (30) towards the indicator element (25) and determining whether the indicator probe (31) engages the indicator element (25) whilst the brake (10) is being applied.

7. A method according to any one of the preceding claims wherein the housing (14) is part of an axle housing.

8. A brake (10) including at least one first brake part (18a,18b,18c,18d) which is moveable into engagement with at least one second brake part (15a,15b,15c,15d) which is rotatable with a rotatable member (12) to be braked, an actuator (20) to apply the brake (10) and an indicator element (25) movable with the actuator (20), a housing (14) for housing the first (18a,18b,18c,18d) and second (15a,15b,15c,15d) brake parts, the actuator (20) and indicator element (25), the housing (14) including a guide (30) adapted to receive an indicator probe (31), the guide (30) being positioned to correspond to a position beyond which the indicator element (25) will move when brake wear has exceeded a predetermined maximum, and access to the first (18a,18b,18c,18d) and second (15a,15b,15c,15d) brake parts visually to examine the extent of brake wear being obscured by the housing (14).

9. A brake (10) according to claim 8 wherein the guide (30) is an opening in the housing (14) through which the indicator probe (31) is insertable.

10. A brake (10) according to any one of claims 8 or 9 wherein a plurality of first brake parts (18a,18b,18c,18d) are provided which are generally parallel and affixed relative to the housing (14), and wherein the rotatable member (12) to be braked is a shaft which carries a plurality of second brake parts (15a,15b,15c,15d) there being a second brake part (15a,15b,15c,15d) interposed between each adjacent pair of first brake parts (18a,18b,18c,18d), and the first (18a,18b,18c,18d) and second (15a,15b,15c,15d) brake parts are immersed in use, in oil.

11. A brake (10) according to any one claims 8 to 10 wherein the guide (30) is provided so as to extend downwardly through the housing (14) towards the indicator element (25).

12. A brake (10) according to any one of claims 8 to 11 wherein a sealing means is provided to close the guide (30) when the indicator probe (31) is removed.

13. A brake (10) according to any one of claims 8 to 12 wherein the actuator (20) is movable to apply the brake (10) by hydraulic fluid and subsequent to brake application, a residual pressure is applied to maintain the actuator (20) in a position adjacent to the first (18a,18b,18c,18d) and second (15a,15b,15c,15d) brake parts whilst not applying braking pressure.

14. A brake (10) according to any one of the preceding claims wherein the indicator element (25) includes a surface with which the indicator probe (31) engages when brake wear has not exceeded a predetermined maximum, the indicator probe (31) including a shank (33) which is inserted into and moved within the guide (30) to bring an end of the probe (31) into engagement with the indicator element (25) when brake wear is less than the predetermined maximum, the shank (33) being dimensioned such that a first shank length extends outwardly of the guide (30) when the end of the shank (33) is in engagement with the indicator element (25), and a second shank length extends outwardly of the guide (30) when the indicator element (25) has moved beyond the guide (30) so that the end of the shank (33) does not engage with the indicator element (25).
